# EUROPEAN PATENT APPLICATION

(11) **EP 4 224 683 A1**
(43) Date of publication of application: **09.08.2023**
(21) Application number: 23153269.8
(22) Date of filing: 25.01.2023
(51) Int. Cl.: H02K 7/06, H02K 7/18, H02K 35/02

(54) **ELECTROMAGNETIC KINETIC ENERGY HARVESTER**

(30) Priority: 03.02.2022 US 202217591609
(71) Applicant: Enervibe LTD, 7019900 Airport City (IL)
(72) Inventor: Haronian, Michael, 9987500 8/4 Mevo Haruv Street, Tzur Hadasa (IL)
(74) Representative: Lapienis, Juozas

(57) **Abstract**

An electromagnetic energy harvesting system for converting kinetic excitations of a body to electricity. The system includes a coil, a magnet, and a push-back magnet that is fixed to the body. The magnet is connected to the body by an axial connection that enables the magnet to rotate about the axis of rotation that is distal from the center of gravity of the magnet. The push-back magnet exerts repulsive force on the magnet rotates the magnet about its axis of rotation in a way that the center of gravity of the magnet rotates away from the push-back magnet. The kinetic excitations of the body cause the magnet to rotate about its axis of rotation in a way that the center of gravity of the magnet rotates towards the push-back magnet, and as a result the rotations of the magnet create alternating voltage between ends of the coil.

## Description

### TECHNICAL FIELD

The present disclosure is related to an electromagnetic kinetic energy harvester that uses movements into rotations converter.

### PRIOR ART

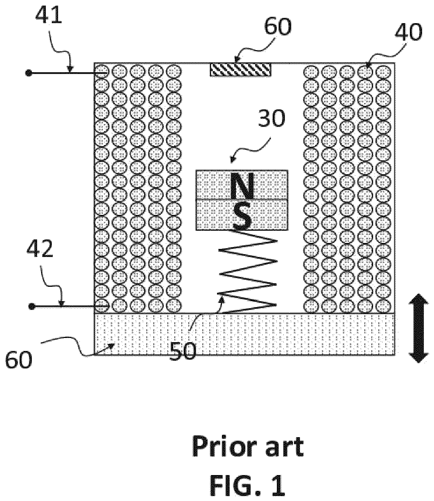

State of the art magnetic kinetic energy harvester, described schematically in Figure 1, uses a magnet (30) suspended over a spring (50) close to a coil (40) and harvest the electricity developing in the coil when magnet move relative to the coil as a result of the kinetic excitation of the body (60). The voltage developing between the coil ends (41) and (42) may be harvested using an appropriate electronic circuit. In these electromagnetic harvesters the spring (50) serves as a restoring force. A drawback of such configuration is the need for a stop (60) in order to prevent the magnet-spring system from moving beyond the elastic range of the spring. On the other hand, when the magnet hits the stop (60) it may damage the magnet and the body of the harvester which reduces the lifetime of the harvester.

### BRIEF DESCRIPTION OF THE FIGURES

FIG. 1 depicts the Prior art.
FIG. 2 schematically depicts the harvester of the present invention.

### THE INVENTION

This patent application relates to electromagnetic kinetic energy harvester that converts vibration or a linear motion of a body into rotation of an electromagnetic device relative to a coil where the electromagnetic device and the coil may be fixed to the body. The electromagnetic device may be a simple magnet. The magnet may be a non-symmetrical magnet fixed to a hinge such that the center of gravity is off the center of the hinge such that movements of the body cause the magnet to rotate around the hinge and relative to the coil. The invention uses a push back magnet that replaces the spring that is used in the prior art. The rotation of the magnet around a hinge instead of a straight movement that requires a stop and the use of a push back magnet results in a robust kinetic energy harvester.

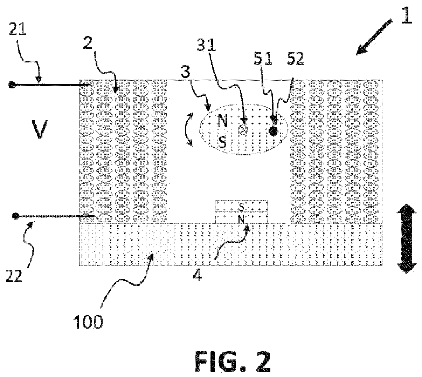

Figure 2 is a schematic depiction of the system (1). In more details, the present invention refers to an electromagnetic energy harvesting system (1) for converting kinetic excitations of a body (100) to electricity. The system (1) includes a coil (2) with two ends (21) (22), a magnet (3), and a push-back magnet (4) that is fixed to the body (100).

The magnet (3) is connected to the body (100) by an axial connection (51) that enables the magnet (3) to rotate about an axis of rotation (52). The connection of the magnet to the body is in a connecting point that makes the axis of rotation in a distal and away from the center of gravity (31) of the magnet (3).

The push-back magnet (4) that is fixed to the body is designed to exert repulsive force on the magnet that causes the magnet (3) to rotate about its axis of rotation (52) in such a way that the center of gravity (31) of the magnet (3) rotates away from the push-back magnet (4).

The kinetic excitations of the body (100) cause the magnet (3) to rotate about its axis of rotation (52) in such a way that the center of gravity (31) of the magnet (3) rotates towards the push-back magnet (4), but then the push-back magnet (4) that exert repulsive force on the magnet causes the magnet (3) to rotate away from the push-back magnet (4), and so on go and back.

These rotations of the magnet that happened relative to the coil (when its center of gravity rotates away from the push-back magnet (4) and towards the push-back magnet (4)) create alternating voltage between the ends (21) (22) of the coil (2).

## Claims

1. An electromagnetic energy harvesting system for converting kinetic excitations of a body to electricity that comprises a coil with two ends, a magnet, and a push-back magnet that is fixed to the body;
wherein the magnet is connected to the body by an axial connection that enables the magnet to rotate about an axis of rotation, and wherein the axis of rotation is distal from a center of gravity of the magnet;
wherein the push-back magnet that is fixed to the body is designed to exerts repulsive force on the magnet that can cause the magnet to rotate about its axis of rotation in such a way that the center of gravity of the magnet rotates away from the push-back magnet;
wherein the kinetic excitations of the body can cause the magnet to rotate about its axis of rotation in such a way that the center of gravity of the magnet rotates towards the push-back magnet; and
wherein said rotations of the magnet can create alternating voltage between the ends of the coil.
